# EUROPÄISCHE PATENTANMELDUNG

(11) **EP 1 226 862 A2**
(43) Veröffentlichungstag der Anmeldung: **31.07.2002**
(21) Anmeldenummer: 02001307.4
(22) Anmeldetag: 18.01.2002
(51) Int. Cl.: B01D 53/94, C05D 7/00, A01G 7/02, C01B 31/20

(54) **Verfahren und Vorrichtung zum Erzeugen eines CO2-haltigen Gasgemisches zum Düngen von Pflanzen in einem Gewächshaus**

(30) Priorität: 30.01.2001 DE 10103206
(71) Anmelder: RUHRGAS AKTIENGESELLSCHAFT, 45138 Essen (DE)
(72) Erfinder: Schollmeyer, Hans-Jürgen, 46348 Raesfeld (DE); Krusenbaum, Heinz, 45149 Essen (DE)
(74) Vertreter: Harlacher, Mechthild, Dipl.-Ing.

(57) **Zusammenfassung**

Die Erfindung betrifft ein Verfahren und eine Vorrichtung zum Erzeugen eines CO₂ - haltigen Gasgemisches zum Düngen von Pflanzen in einem Gewächshaus aus dem Abgas eines stationären gasbetriebenen Verbrennungsmotors.

Erfindungsgemäß ist der Verbrennungsmotor, der mit Luftzahlen λ zwischen 0,95 bis 1,0 betrieben wird, abgasseitig an eine Leitung (2) angeschlossen, die zu einem Gewächshaus (11) führt. In der Leitung (2) befindet sich ein erster Katalysator (3), der als Drei-Wege-Katalysator ausgebildet ist. Ein zweiter Katalysator (8) ist als Oxidationskatalysator ausgebildet.

In der Leitung (2) stromauf des zweiten Katalysators (8) endet eine erste Luftleitung (5), die an einer Einrichtung zur Druckerhöhung (6) angeschlossen ist. In der ersten Luftleitung (5) ist ein Drosselorgan (7) angeordnet. Die Luftmenge wird in Abhängigkeit vom O₂ oder NOₓ-Gehalt stromab der zweiten katalytischen Reaktion eingestellt oder geregelt.

## Beschreibung

Die Erfindung betrifft ein Verfahren und eine Vorrichtung zum Erzeugen eines CO₂ - haltigen Gasgemisches zum Düngen von Pflanzen in einem Gewächshaus aus dem Abgas eines stationären gasbetriebenen Verbrennungsmotors.

Im Gartenbau mit Unterglas-Produktion wird CO₂ in der Gewächshausluft zur Förderung des Wachstums benötigt. Üblicherweise wird das CO₂ aus Flaschen zugeführt. Das ist entsprechend kostenaufwendig.

Da das Abgas von gasbetriebenen Verbrennungsmotoren einen relativ hohen CO₂ Gehalt aufweist und außerdem Wärme zur Beheizung der Gewächshäuser sowie Strom zur wachstumsfördernden Pflanzenbelichtung benötigt wird, wäre eine komplette Versorgung mit Wärme, Strom und CO₂ durch ein gasbetriebenes BHKW denkbar. Allerdings ist es erforderlich, aus dem Abgas ein CO₂ haltiges Gasgemisch zu erzeugen, das zum Düngen von Pflanzen, insbesondere Gemüse geeignet ist. Dazu müssen die Schadstoffe im Abgas auf Werte abgesenkt werden, die deutlich und dauerhaft unterhalb der in der TA-Luft festgelegten Grenzwerte (Stand November 2000)in Höhe von
- 500 mg/m³ NOₓ (bei 5%Restsauerstoff)
- 650 mg/m³ CO (bei 5%Restsauerstoff)
   20-150 mg/m³ HC (je nach Klasse)
liegen, da Pflanzen sehr empfindlich bereits auf sehr geringe Schadstoffanteile reagieren.

Es sind verschiedene Verfahren zum Reduzieren der Schadstoffe im Abgas von Verbrennungsmotoren bekannt. Bei Verbrennungsmotoren, die stöchiometrisch, d. h. mit Luftzahlen λ = 1 betrieben werden, ist die Verwendung von Drei-Wege-Katalysatoren bekannt. Dort werden die Schadstoffe NOₓ, CO und vorhandene Kohlenwasserstoffe weitgehend reduziert. Nachteilig ist, daß dieses Verfahren nur dann wirksam ist, wenn bei der Betriebsweise des Motors ein sehr eng begrenzter Luftzahlbereich eingehalten wird. Falls bei bestimmten Betriebszuständen die Luftzahl von λ 0,99 bis 1,0 unter- oder überschritten wird, werden die in der TA-Luft festgelegten Grenzwerte von NOₓ, CO oder von Kohlenwasserstoffen überschritten.

Für Verbrennungsmotore, die mit λ größer 1,0 betrieben werden, sind Abgas-Reinigungsverfahren bekannt, bei denen das Abgas mit einem Reduktionsgas gemischt und dieses Mischgas einem Reduktionskatalysator zugeführt wird. Als Reduktionsgas wird üblicherweise Ammoniak oder Harnstoff verwendet. Anschließend wird das Gemisch einem Oxidationskatalysator zugeführt. Nachteilig bei diesem Verfahren ist, daß die Erzeugung und Zugabe des Reduktionsgases relativ kostenaufwendig sind.

Aufgabe der Erfindung ist es demgemäß, ein Verfahren und eine Vorrichtung zum Erzeugen eines dauerhaft schadstoffarmen CO₂ -haltigen Gasgemisches zum Düngen von Pflanzen in einem Gewächshaus, ohne Verwendung von Reduktionsmitteln, zu schaffen.

Diese Aufgabe wird bei einem Verfahren der eingangs genannten Art durch den kennzeichnenden Teil des Anspruches 1 gelöst.

Bei diesem Verfahren wird der Verbrennungsmotor nahstöchiometrisch betrieben, und zwar mit Luftzahlen λ zwischen 0,95 und 1,0. Die Bandbreite der Luftzahl λ ist relativ groß, so daß während des Betriebes keine Gefahr besteht, daß der Luftzahlbereich über- oder unterschritten wird und unzulässige Schadstoffe entstehen.

Bei der ersten katalytischen Reaktion in dem Reduktionskatalysator reagieren die Stickoxide mit den Kohlenmonoxiden und den Kohlenwasserstoffensowie dem Restsauerstoff aus dem Verbrennungsprozeß und werden in Kohlendioxid und Wasser umgesetzt. Auf diese Weise werden die Stickoxide stark vermindert.

Bei der zweiten katalytischen Reaktion in dem Oxidationskatalysator werden die bei der ersten Reaktion nicht umgesetzten Komponenten Kohlenmonoxid und unverbrannte Kohlenwasserstoffe, insbesondere Ethen, mit dem zugeführten Luftsauerstoff nahezu vollständig in Wasser und Kohlendioxid umgesetzt.

Die Schadstoff-Konzentration im Gasgemisch wird mit Hilfe des erfindungsgemäßen Verfahrens deutlich unter die Grenzwerte der TA-Luft gesenkt. Messungen haben NOx Werte im Gasgemisch von kleiner als 10 mg/m³ ergeben.

Da kein Reduktionsmittel benötigt wird, ist das Verfahren wirtschaftlich und ermöglicht den Einsatz von gasangetriebenen Blockheizkraftwerken auch in kleineren Gewächshäusern.

Vorzugsweise wird das Gasgemisch vor der zweiten katalytischen Reaktion homogenisiert.

Es hat sich weiterhin als vorteilhaft erwiesen, wenn das Abgas vor der zweiten katalytischen Reaktion gekühlt wird. Es hat sich gezeigt, daß damit die NOx - Neubildung wirksam verhindert werden kann.

Untersuchungen haben gezeigt, dass eine Erhöhung der CO₂-Konzentration in der Gewächshausluft bei entsprechenden Temperatur- und Lichtverhältnissen zur nur bis zu einer bestimmten Konzentration zu einer Steigerung der Photosyntheseleistung und damit des pflanzlichen Stoffaufbaus führen können. Sehr hohe CO₂-Konzentrationen bis zu 5000 vpm führen hingegen zu einer Reduzierung der Photosynthese. Positive Wirkungen wurden bei Konzentrationen von etwa 500 bis 800 vpm nachgewiesen. Der CO₂-Gehalt im Motorenabgas liegt bei stöchiometrischer Verbrennung bei über 12 Vol.-%. Zur Einstellung der optimalen CO₂-Konzentration in der Gewächshausluft wird dem Gasgemisch vor dem Eintritt in das Gewächshaus Luft, vorzugsweise Umgebungsluft mittels eines Gebläses zugemischt, und zwar in Abhängigkeit von der einzustellenden CO₂-Konzentration in der Gewächshausluft . Das Gebläse wird von dem Blockheizkraftwerk oder separat angetrieben.

Die Vorrichtung zum Erzeugen eines CO₂ -haltigen Gasgemisches zum Düngen von Pflanzen in einem Gewächshaus aus dem Abgas eines stationären gasbetriebenen Verbrennungsmotors ist dadurch gekennzeichnet, daß der Verbrennungsmotor, der mit Luftzahlen λ zwischen 0,95 bis 1,0 betrieben wird, abgasseitig an eine Leitung angeschlossen ist, die zu einem Gewächshaus führt, daß sich in der Leitung ein erster Katalysator befindet, der als Drei-Wege-Katalysator ausgebildet ist, daß ein zweiter Katalysator als Oxidationskatalysator ausgebildet ist, wobei in der Leitung stromauf des Oxidationskatalysators eine erste Luftleitung endet, die an einer Einrichtung zur Druckerhöhung angeschlossen ist, wobei in der ersten Luftleitung ein Drosselorgan angeordnet ist.

Es ist besonders vorteilhaft, wenn das Drosselorgan mit einem Sensor zum Erfassen des O₂- oder NOₓ-Gehaltes stromab des zweiten Katalysators verbunden ist. Auf diese Weise kann die Luftmenge gesteuert oder geregelt werden.

Vorzugsweise wird die Einrichtung zur Druckerhöhung vom Verbrennungsmotor angetrieben wird.

Bei einer bevorzugten Ausführungsform befindet sich in der Leitung stromab des ersten Katalysators eine Mischeinrichtung zur Homogenisierung von Abgas und Luft.

Nach einem weiteren Merkmal der Erfindung befindet sich in der Leitung stromab des ersten und/oder des zweiten Katalysators ein Wärmetauscher. Der Wärmetauscher stromab des ersten Katalysators hat die Aufgabe, das Abgas zu kühlen, um ein NOx - Neubildung zu verhindern. Der Wärmetauscher stromab des zweiten Katalysators dient zur Auskoppelung von Wärme aus dem Gasgemisch zu Heizzwecken oder zur Warmwasserbereitung.

Erfindungsgemäß sind die Katalysatoren, die Einrichtung zur Druckerhöhung, die erste Luftleitung, die Mischeinrichtung sowie der Sensor in einem gemeinsamen Gehäuse angeordnet.

Nach einem weiteren vorteilhaften Merkmal der Erfindung endet in der Leitung vor deren Eintritt in das Gewächshaus eine zweite Luftleitung, die an ein Gebläse angeschlossen ist.

Die Erfindung schlägt ferner vor, daß sich in der Leitung stromab des zweiten Katalysators eine Klappe befindet, die im geschlossenen Zustand eine zu einem Schornstein führende Abgasleitung freigibt, wobei die Klappe mit dem Sensor in der Leitung stromab des zweiten Katalysators oder einem zweiten Sensor zum Erfassen des NOₓ-Gehaltes in der Leitung vor deren Eintritt in das Gewächshaus verbunden ist..

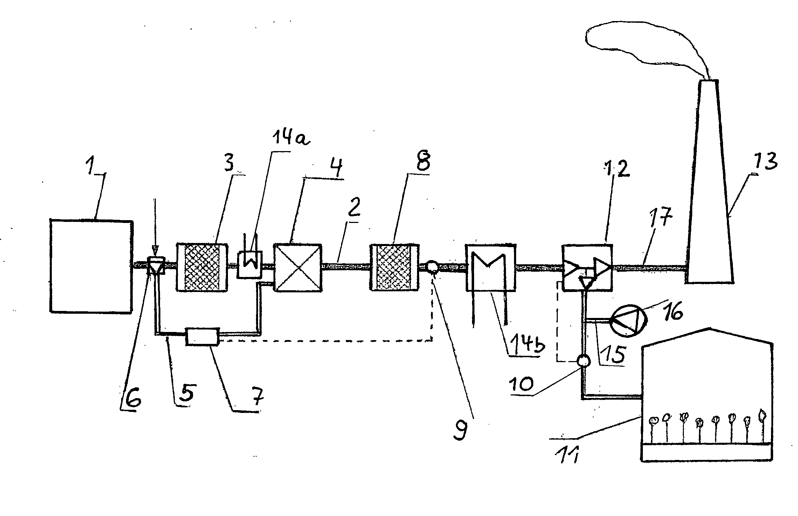

Die Erfindung wird im folgenden anhand eines bevorzugten Ausführungsbeispiels im Zusammenhang mit der Zeichnung, die eine Prinzipskizze darstellt, näher erläutert.

Ein Verbrennungsmotor 1, dem über nicht dargestellte Leitungen Erdgas und Verbrennungsluft zugeführt werden, wird mit Luftzahlen λ zwischen 0,95 und 1 betrieben. Der Verbrennungsmotor 1 ist abgasseitig an eine Leitung 2 angeschlossen. In dieser Leitung 2 befindet sich ein mit Platin/Rhodium beschichteter erster Katalysator 3, der als Drei-Wege-Katalysator ausgebildet ist. Der erste Katalysator 3 ist motornah angeordnet, um Temperaturverluste zu vermeiden. In dem ersten Katalysator 3 wird NOₓ nahezu vollständig und C₂H₄ zu einem nennenswerten Prozentsatz in CO₂ umgesetzt.

Stromab des ersten Katalysators 3 befindet sich eine Mischeinrichtung 4, in der eine erste Luftleitung 5 endet, die an eine Einrichtung 6 zur Druckerhöhung angeschlossen ist und die ein Drosselorgan 7 aufweist. Über die Mischeinrichtung 4 wird Luft gleichmäßig über den Querschnitt der Abgasleitung 2 verteilt. Die Luft wird auf einen Druck verdichtet, der im wesentlichen dem in der Leitung 2 entspricht. Die Einrichtung 6 zur Druckerhöhung wird vom Verbrennungsmotor 1 angetrieben. Im Ausführungsbeispiel ist an den Verbrennungsmotor 1 ein Abgasturbolader angeflanscht.

Das Gasgemisch wird über einen mit Platin oder Platin/Palladium beschichteten zweiten Katalysator 8 geleitet, der als Oxidationskatalysator ausgebildet ist. In diesem wird das noch nicht umgesetzte CO und sonstige Kohlenwasserstoffe, insbesondere C₂H₄ mit dem Luftsauerstoff zu Kohlendioxid und Wasser oxidiert.

Stromab des zweiten Katalysators 8 ist ein erster Sensor 9 angeordnet, der den O₂oder den NOₓ-Gehalt im Gemisch mißt.

Die Luftmenge wird so eingestellt, daß genügend Sauerstoff zur Oxidation der unverbrannten Abgasbestandteile in dem zweiten Katalysator vorliegt. Der optimale O₂-Gehalt ist von der Katalysatorausgestaltung abhängig und liegt zwischen 0,2 und 4 Vol-%. Falls die Luftmenge zu groß ist, besteht die Gefahr, daß eine NOₓ-Neubildung stattfindet.

Die Luftmenge kann auch geregelt werden. Zur Bestimmung der optimalen Luftmenge wird vorzugsweise der NOₓ-Gehalt oder der O₂ Gehalt stromab des zweiten Katalysators 8 gemessen. Bei Überschreitung eines Grenzwertes wird ein Stellsignal für ein Drosselorgan 7 in der Luftleitung 5 erzeugt und die Luftmenge korrigiert.

Vor dem Eintritt der Leitung 2 in das Gewächshaus 11 befindet sich ein zweiter Sensor 10 zur Überwachung der Restschadstoffkonzentration, insbesondere des NOₓ-Gehaltes. Alternativ dazu kann auch eine geringe Abgasmenge entnommen und zur Überwachung der Restschadstoffe über ein nicht dargestelltes Meßgerät oder entsprechende Sensoren geleitet werden.

In der Leitung 2 befindet sich eine Abgasklappe 12, die mit dem Sensor 10 verbunden ist und die geschlossen wird, wenn die Grenzwerte überschritten werden sollten. Das Gasgemisch wird in diesem Fall mittels einer Leitung 17 über einen Schornstein 13 ins Freie geführt. Die Abgasklappe 12 kann auch alternativ von dem Sensor 9 gesteuert werden.

Mittels eines Wärmetauscher 14a wird das Abgas nach der ersten katalytischen Reaktion gekühlt. Auf diese Weise wird die Neubildung von NOₓ wirksam vermieden. In einem Wärmetauscher 14b wird dem Gasgemisch die Wärme zu andersweitigen Nutzung entzogen, bevor es einem Gewächshaus 11 oder dem Schornstein 13 zugeführt wird.

Im Gewächshaus 11 werden Pflanzen, insbesondere Blumen oder Gemüse angebaut. Wenn die Grenzwerte für die Restschadstoffe, insbesondere für NOₓ nicht überschritten werden, wird das Gasgemisch zum Gewächshaus 11 weitergeleitet. Vor der Einleitung des Gasgemisches in das Gewächshaus 11 wird dem Gasgemisch über eine zweite Luftleitung 15 mittels eines Gebläses 16 Umgebungsluft zugemischt, und zwar in Abhängigkeit von der optimalen CO₂-Konzentration in der Gewächshausluft. Das Gebläse 16 kann von dem Blockheizkraftwerk oder separat angetrieben werden.

Die beiden Katalysatoren 3 und 8, die Bauteile 4 bis 7 im Zusammenhang mit der Luftzuführung, die Wärmetauscher sowie der Sensor 9 sind in einem nicht dargestellten kompakten Gehäuse untergebracht. Auf diese Weise ist der Platzbedarf der Vorrichtung relativ gering. Außerdem werden die Abstrahlungsverluste, die zu einer unerwünschten Absenkung der Abgastemperatur führen, minimiert.

Im Rahmen der Erfindung sind ohne weiteres Abwandlungsmöglichkeiten gegeben. Die Luft kann beispielsweise über ein elektrisch angetriebenes Gebläse oder als Preßluft vor der zweiten katalytischen Reaktion zugeführt werden. Ferner kann es bei speziellen Anwendungen vorteilhaft sein, die Luft vorzuwärmen.

Die Katalysatoren können auch mit anderen geeigneten Edelmetallen beschichtet sein.

## Patentansprüche

1. Verfahren zum Erzeugen eines CO₂ -haltigen Gasgemisches zum Düngen von Pflanzen in einem Gewächshaus aus dem Abgas eines stationären gasbetriebenen Verbrennungsmotors,
**dadurch gekennzeichnet,**
**daß** der Verbrennungsmotor mit Luftzahlen λ zwischen 0,95 und 1,0 betrieben wird, daß das Abgas einer ersten katalytischen Reaktion zur Reduktion von NOx unterworfen wird, daß anschließend Luft unter erhöhtem Druck zugegeben wird, und daß dieses Gasgemisch einer zweiten katalytischen Reaktion zur Reduktion von CO und H₂ unterworfen wird, wobei die Luftmenge vom O₂ oder NOₓ-Gehalt stromab der zweiten katalytischen Reaktion abhängig ist.

2. Verfahren nach Anspruch 1,
**dadurch gekennzeichnet,**
**daß** das Gasgemisch vor der zweiten katalytischen Reaktion homogenisiert wird.

3. Verfahren nach Anspruch 1 oder 2,
**dadurch gekennzeichnet,**
**daß** das Abgas vor der zweiten katalytischen Reaktion gekühlt wird.

4. Verfahren nach einem der Ansprüche 1 bis 3,
**dadurch gekennzeichnet,**
**daß** dem Gasgemisch stromab der zweiten katalytischen Reaktion Luft zugemischt wird, wobei die Luftmenge vom CO₂-Gehalt im Gewächshaus abhängig ist.

5. Vorrichtung zum Erzeugen eines CO₂-haltigen Gasgemisches zum Düngen von Pflanzen in einem Gewächshaus aus dem Abgas eines stationären gasbetriebenen Verbrennungsmotors,
**dadurch gekennzeichnet,**
**daß** der Verbrennungsmotor, der mit Luftzahlen λ zwischen 0,95 bis 1,0 betrieben wird, abgasseitig an eine Leitung (2) angeschlossen ist, die zu einem Gewächshaus (11) führt, daß sich in der Leitung (2) ein erster Katalysator (3) befindet, der als Drei-Wege-Katalysator ausgebildet ist, daß ein zweiter Katalysator (8) als Oxidationskatalysator ausgebildet ist, wobei in der Leitung (2) stromauf des Oxidationskatalysators eine erste Luftleitung (5) endet, die an eine Einrichtung zur Druckerhöhung (6) angeschlossen ist, wobei in der ersten Luftleitung (5) ein Drosselorgan (7) angeordnet ist.

6. Vorrichtung nach Anspruch 5,
**dadurch gekennzeichnet,**
**daß** das Drosselorgan (7) mit einem Sensor (9) zum Erfassen des O₂- oder NOₓ-Gehaltes stromab des zweiten Katalysators (8) verbunden ist.

7. Vorrichtung nach Anspruch 5 oder 6,
**dadurch gekennzeichnet,**
**daß** die Einrichtung zur Druckerhöhung (6) vom Verbrennungsmotor (1) angetrieben wird.

8. Vorrichtung nach einem der Ansprüche 5 bis 7,
**dadurch gekennzeichnet,**
**daß** sich in der Leitung (2) stromab des ersten Katalysators (3) eine Mischeinrichtung (4) zur Homogenisierung von Abgas und Luft befindet.

9. Vorrichtung nach einem der Ansprüche 5 bis 8,
**dadurch gekennzeichnet**
**daß** sich in der Leitung (2) stromab des ersten und/oder des zweiten Katalysators (3, 8) ein Wärmetauscher (14a, 14b) befindet.

10. Vorrichtung nach einem der Ansprüche 5 bis 9,
**dadurch gekennzeichnet,**
**daß** der erste und der zweite Katalysator (3, 8), die Einrichtung zur Druckerhöhung (6), die erste Luftleitung (5), der Wärmetauscher (14a,b), die Mischeinrichtung (4) sowie der Sensor (9) in einem gemeinsamen Gehäuse angeordnet sind.

11. Vorrichtung nach einem der Ansprüche 5 bis 10,
**dadurch gekennzeichnet,**
**daß** in der Leitung (2) vor deren Eintritt in das Gewächshaus (11) eine zweite Luftleitung (15) endet, die an ein Gebläse (16) angeschlossen ist.

12. Vorrichtung nach einem der Ansprüche 5 bis 11,
**dadurch gekennzeichnet,**
**daß** sich in der Leitung (2) stromab des zweiten Katalysators (8) eine Klappe (12) befindet, die im geschlossenen Zustand eine zu einem Schornstein (13) führende Abgasleitung (17) freigibt, wobei die Klappe (12) mit dem Sensor (9) oder mit einem zweiten Sensor (10) zum Erfassen des NOₓ-Gehaltes in der Leitung (2) vor deren Eintritt in das Gewächshaus (11) verbunden ist.
